# NEUE EUROPÄISCHE PATENTSCHRIFT

(11) **EP 1 129 034 B2**
(45) Veröffentlichungstag und Bekanntmachung des Hinweises auf die Entscheidung über den Einspruch: **30.03.2011**
(45) Hinweis auf die Patenterteilung: 07.04.2004
(21) Anmeldenummer: 99950593.6
(22) Anmeldetag: 01.10.1999
(51) Int. Cl.: C01F 7/54, B23K 35/36

(54) **VERFAHREN ZUR HERSTELLUNG KOMPLEXER FLUOROALUMINATE, DIE HERGESTELLTEN FLUOROALUMINATE UND VERWENDUNG VON SPRÜHTROCKNUNG UND POLYALKYLENGLYKOLEN ZUR STEUERUNG DER STRUKTUR VON FLUOROALUMINATEN**
METHOD FOR THE PRODUCTION OF COMPLEX FLUOROALUMINATE, THE FLUOROALUMINATE PRODUCED THEREBY AND THE UTILIZATION OF SPRAY DRYING AND POLYALKYLENEGLYCOLS FOR CONTROLLING THE STRUCTURE OF FLUOROALUMINATES
PROCEDE DE PRODUCTION DE FLUORO-COMPLEXES D'ALUMINIUM, LES FLUORO-COMPLEXES D'ALUMINIUM AINSI OBTENUS AINSI QUE L'UTILISATION DU SECHAGE PAR PULVERISATION ET DE POLYETHYLENE-GLYCOLS POUR COMMANDER LA STRUCTURE DES FLUORURES D'ALUMINIUM

(30) Priorität: 05.10.1998 DE 19845758
(43) Veröffentlichungstag der Anmeldung: 05.09.2001
(73) Patentinhaber: Honeywell Specialty Chemicals Seelze GmbH, 30926 Seelze (DE)
(72) Erfinder: REMMERS, Graalf, D-30823 Garbsen (DE); LIEKER, Horst, D-30165 Hannover (DE)
(74) Vertreter: Clarke, Lionel Paul
(86) Internationale Anmeldenummer: PCT/EP1999/007292
(87) Internationale Veröffentlichungsnummer: WO 2000/020335

(56) Entgegenhaltungen:
- EP-A- 0 063 750
- WO-A-92/17294
- WO-A-95/05911
- GB-A- 900 790
- US-A- 4 053 375

## Beschreibung

Die vorliegende Erfindung betrifft ein Verfahren zur Herstellung eines Kaliumtetrafluoroaluminats, wobei im Laufe dieses Verfahrens das Fluoroaluminat durch Sprühtrocknung aus einer das Fluoroaluminat enthaltenden Suspension erhalten wird und die Kornstruktur dieses Fluoroaluminats durch eine strukturbeeinflussende Substanz gesteuert wird.

Fluoroaluminate finden in vielen Bereichen der Technik Verwendung. So wird beispielsweise Kaliumtetrafluoroaluminat als Zusatz zu Schleifmitteln, bei der Glasproduktion oder als Flußmittel bei technischen Prozessen eingesetzt.

Ein Weg, wie beispielsweise Kaliumtetrafluoroaluminat hergestellt werden kann, ist in der JP 08157212 offenbart. In dem dort beschriebenen Verfahren wird Aluminiumhydroxid mit 20 Gew.-%igem Fluorwasserstoff umgesetzt und die resultierende Lösung, die Tetrafluoroaluminiumsäure enthält, mit KOH neutralisiert.

Die DE 31 16 469 beschreibt ein Verfahren, in dem eine wäßrige, HAlF₄ enthaltende Lösung mit KOH neutralisiert und dabei Kaliumtetrafluoroaluminat gebildet wird.

Ein Problem, das bei der Herstellung von Tetrafluoroaluminaten auftreten kann, liegt in der Kornstruktur, insbesondere in der Partikelgröße des erhaltenen Fluoroaluminats begründet. So beeinträchtigt beispielsweise eine Grobkornbildung die erforderliche Qualität des Fluoroaluminats für bestimmte Anwendungsbereiche, in denen amorphe Strukturen im unteren µm-Bereich benötigt werden. Eine mögliche nachträgliche Erhöhung des Feinkornanteils ist darüberhinaus unwirtschaftlich.

Ein weiteres Problem, das bei der Herstellung von Tetrafluoroaluminaten auftreten kann, is: die Restfeuchte, die im Produkt verbleibt und sich negativ auf die gewünschten Applikationsbereiche auswirken kann.

Eine Aufgabe der vorliegenden Erfindung war es demgemäß, ein Herstellungsverfahren für Kaliumtetrafluoroaluminate bereitzustellen, das diese Nachteile nicht aufweist.

Die vorliegende Erfindung betrifft ein Verfahren zur Herstellung eines Kaliumtetrafluoroaluminats, wobei das Fluoroaluminat durch Sprühtrocknung aus einer das Fluoroaluminat enthaltenden Suspension erhalten wird, in der eine strukturbeeinflussende Substanz eingesetzt wird.

Dabei wird die das Kaliumtetrafluoroaluminat enthaltende Suspension zunächst dem Sprühtrockner zugeführt. Bevorzugt wird hierbei die Zuführung über ein Dosierorgan.

Prinzipiell gibt es im Rahmen des erfindungsgemäßen Verfahrens keine Beschränkungen hinsichtlich der Art und Weise, wie die das Fluoroaluminat enthaltende Suspension versprüht wird. Anwendbar sind beispielsweise rotierende Sprühscheiben, der hydrodynamische Eintrag über Einstoffdüsen oder der Eintrag mittels Druckluft über Zweistoffdüsen. In einer Ausführungsform des erfindungsgemäßen Verfahrens wird beispielsweise die das Fluoroaluminat enthaltende Suspension über eine gesteuerte Spindelpumpe einem Sprühtrockner zugeführt und über eine Zerstäuberscheibe mit einem Durchmesser von 150 mm und einer Rotationsgeschwindigkeit von 16.000 U/min eingetragen.

Der Produktaustrag kann ebenfalls in sämtlichen denkbaren Möglicheiten erfolgen. Als Beispiele sind etwa ein zyklonaler Austrag oder ein Austrag über eine oder mehrere abreinigende Filteranlagen zu nennen.

Die im Sprühtrocknungsverfahren angewendeten Temperaturen des Heißluftstromes sind im wesentlichen frei wählbar und werden prinzipiell nur durch den Schmelzpunkt des Fluoroaluminats und durch die Gegebenheiten der Anlage begrenzt.

Die Wahl der Temperatur erlaubt es unter anderem, die Trocknungskapazität zu beeinflussen und die Restfeuchte des Sprühgutes nach der Sprühtrocknung zu steuern. Damit ist es möglich, den Feuchtigkeitsgehalt des Fluoroaluminats den Anforderungen anzupassen, die von Abnehmerseite an das Material gestellt werden. Im allgemeinen liegen die Temperaturen in einem Bereich von 100 bis 500 °C, der beispielsweise eine relativ geringe Restfeuchte des Fluoroaluminats von < 1 Gew.-% liefert.

Selbstverständlich ist es auch möglich, zwei oder mehr Sprühtrocknungsschritte im erfindungsgemäßen Verfahren anzuwenden.

Ebenso ist es möglich, in einer Modifikation des Verfahrens der Sprühtrocknung als weitere Trocknungsstufe eine andere Trocknung nach dem Stand der Technik, beispielsweise eine Fließbett-Trocknung, anzufügen.

Ein weiterer Vorteil des erfindungsgemäßen Verfahrens ist die Beeinflussung der Kornstruktur des Kaliumtetrafluoroaluminats, die durch die Sprühtrocknung ermöglicht wird. Die Wahl des Dispensionsorgans im Sprühtrockner eröfmet die Möglichkeit, Einfluß auf die Kornstruktur zu nehmen.

Durch die Zugabe einer strukturbeeinflussenden Substanz an geeigneter Stelle bei der Herstellung der das Kaliumtetrafluoroaluminat enthaltenden Suspension erhält man die Möglichkeit, im erfindungsgemäßen Verfahren die Kornstruktur und insbesondere die Korngrößenverteilung sowie das in der praktischen Anwendung in der Regel geforderte mehlartige Erscheinungsbild von Fluoroaluminaten zu steuern.

Ein feinstrukturiertes und mehlartiges Erscheinungsbild des Kaliumtetrafluoroaluminats ist erhätlich, wenn das Fluoroaluminat aus einer Lösung gewonnen wird, die eine oder mehrere Vorstufen umfassen kann, wobei der Lösung die strukturbeeinflussende Substanz zugegeben wird, bevor das Fluoroaluminat aus der Lösung erhalten wird.

Die strukturbeeinflussende Substanz wird in einem Verfahren eingesetzt, in dem das Kaliumtetrafluoroaluminat durch Fällung aus der das Fluoroaluminat enthaltenden Lösung als Feststoff erhalten wird.

Demgemäß betrifft die vorliegende Erfindung ein Verfahren, das dadurch gekennzeichnet ist, daß es die Schritte (i) bis (iv) umfaßt:
(i) Herstellen einer Lösung, die eine Vorstufe des Fluoroaluminats umfaßt;
(ii) Zugabe der strukturbeeinflussenden Substanz zur Lösung aus (i);
(iii) Fällung des Fluoroaluminats aus der aus (ii) erhaltenen Lösung unter Erhalt der das Fluoroaluminat enthaltenden Suspension;
(iv) Sprühtrocknung der aus (iii) erhaltenen Suspension unter Erhalt des Fluoroaluminats.

Die Ausfällung erfolgt dabei bevorzugt unter Zugabe von wäßrigen Laugen. Insbesondere bevorzugt wird das Fluoroaluminat unter Zugabe einer wäßrigen Kaliumhydroxidlösung ausgefällt.

Die Konzentration der wäßrigen Kaliumhydroxidlösung ist relativ unkritisch und kann von sehr niedriger bis zur höchstmöglichen Konzentration reichen. Bevorzugt liegt sie im Bereich von 40 bis 50 Gew.-%.

Ebenso ist der Einsatz von Lösungen möglich, die neben KOH weitere K⁺-liefernde Komponenten umfaßt. Unter anderem sind hierbei etwa K₂CO₃ oder KCl zu nennen.

Während der Ausfüllung des Kaliumtetrafluoroaluminates wird in einer bevorzugten Ausführungsform des erfindungsgemäßen Verfahrens gerührt. Dabei ist es möglich, durch die Wahl eines geeigneten Rührers die Kornstruktur des Kaliumtetrafluoroaluminats, falls erforderlich, zu optimieren.

Die Temperatur, bei der das Kaliumtetrafluoroaluminat ausgefällt wird, liegt im erfindungsgemäßen Verfahren im allgemeinen im Bereich von 0 bis 100 °C, bevorzugt im Bereich von 60 bis 90 °C, besonders bevorzugt im Bereich von 65 bis 85 °C, weiter besonders bevorzugt im Bereich von 65 bis 80 °C und insbesondere bei ungefähr 70 °C.

Der pH-Wert der nach der Fällung des Kaliumtetrafluoroaluminats erhaltenen Suspension wird im erfindungsgemäßen Verfahren auf einen Wert eingestellt, der bevorzugt im Bereich von 4,5 bis 7,0, besonders bevorzugt im Bereich von 5,5 bis 6,5 und insbesondere bei 6 liegt.

Im Rahmen des erfindungsgemäßen Verfahrens ist es prinzipiell möglich, die Komstruktur aller Kaliumtetrafluoroaluminate, die nach oben beschriebenem Verfahren herstellbar sind, durch den Einsatz einer strukturbeeinflussenden Substanz zu steuern.

Wird das Kaliumtetrafluoroaluminat nach dem oben beschriebenen, erfindungsgemäßen Verfahren hergestellt, so kann die Lösung aus Schritt (i) sämtliche denkbaren Vorstufen, aus denen dieses Fluoroaluminat gewonnen werden kann, umfassen.

Insbesondere wird im Rahmen der vorliegenden Erfindung in Schritt (i) eine Lösung hergestellt, die als Vorstufe, aus der das bevorzugt hergestellte Kaliumtetrafluoroaluminat gewonnen wird, Tetrafluoroaluminiumsäure umfaßt.

Daher betrifft die vorliegende Erfindung auch ein Verfahren, wie oben beschrieben, das dadurch gekennzeichnet ist, daß die Vorstufe des Fluoroaluminats Tetrafluoroaluminiumsäure ist.

Eine solche, Tetrafluoroaluminiumsäure umfassende Lösung kann im Rahmen des erfindungsgemäßen Verfahrens wiederum nach allen Methoden, die aus dem Stand der Technik bekannt sind, hergestellt werden.

Bevorzugt wird im Rahmen der vorliegenden Erfindung diese Lösung aus Aluminiumoxidhydrat und einer wäßrigen Fluorwasserstofflösung hergestellt. Dabei wird im allgemeinen handelsübliches Aluminiumoxidhydrat eingesetzt. Bevorzugt liegt der Al₂O₃-Gehalt des Aluminiumoxidhydrats im Bereich von 65 Gew.-%. Selbstverständlich können auch geringer konzentrierte Aluminiumoxidhydrate eingesetzt werden, die beispielsweise aus Recyclinganlagen gewonnen werden.

Das Aluminiumoxidhydrat und die wäßrige Fluorwasserstofflösung werden dabei derart miteinander gemischt, daß das molare Verhältnis von Al : F im allgemeinen in einem Bereich von 1 : 3,9 bis 1 : 4,5, bevorzugt in einem Bereich von 1 : 4,0 bis 1 : 4,4, besonders bevorzugt in einem Bereich von 1 : 4,1 bis 1 : 4,3 und insbesondere in einem Bereich von ungefähr 1 : 4,2 liegt.

Die Konzentration der erhaltenen Lösung an Tetrafluoroaluminiumsäure wird im erfindungsgemäßen Verfahren so eingestellt, daß sie im allgemeinen in einem Bereich von 5 bis 40 Gew.-%, bevorzugt in einem Bereich von 10 bis 30 Gew.-% und besonders bevorzugt in einem Bereich von 15 bis 20 Gew.-% liegt. Je nach den Konzentrationen des verwendeten Aluminiumoxidhydrats und der wäßrigen Fluorwasserstofflösung kann es erforderlich sein, der Tetrafluoroaluminosäure umfassenden Lösung zur Einstellung der beschriebenen Konzentrationsbereiche zusätzlich Lösungmittel zuzufügen.

Dabei kommen prinzipiell alle Lösungsmittel in Betracht, die für diesen Zweck geeignet sind und die die spätere Gewinnung des Kaliumtetrafluoroaluminates nicht stören. Bevorzugt wird im erfindungsgemäßen Verfahren das Lösungsmittel Wasser eingesetzt.

Im erfindungsgemäßen Verfahren wird gemäß Schritt (ii) die strukturbeeinflussende Substanz der die Vorstufe des Kaliumtetrafluoroaluminats, inbesondere die Tetrafluoroaluminiumsäure umfassenden Lösung zugegeben.

Es ist aber ebenso denkbar, die strukturbeeinflussende Substanz vor der Herstellung der die Vorstufe des Kaliumtetrafluoroaluminats enthaltenden Lösung entweder der die Fluor wasserstoff enthaltenden Lösung oder der das Aluminiumoxidhydrat enthaltenden Lösung oder auch beiden zuzugeben.

Dabei ist es möglich, die strukturbeeinflussende Substanz als Feststoff oder als Flüssigkeit, je nach Aggregatzustand der strukturbeeinflussenden Substanz, zuzugeben.

Im Falle einer festen, strukturbeeinflussenden Substanz wird diese vor der Zugabe bevorzugt zuerst in einem geeigneten Lösungsmittel gelöst.

Der Begriff "geeignetes Lösungsmittel" bedeutet hierbei, daß sich die strukturbeeinflussende Substanz in diesem Lösungsmittel löst und das Lösungsmittel die spätere Ausfällung des Kaliumtetrafluoroaluminats nicht stört.

Selbstverständlich ist es auch möglich, ein Gemisch aus zwei oder mehr geeigneten Lösungsmitteln einzusetzen. Besonders bevorzugt wird als Lösungmittel Wasser verwendet.

Ebenso ist es denkbar, eine feste, strukturbeeinflussende Substanz in einer geeigneten Flüssigkeit oder in einem geeigneten Flüssigkeitsgemisch zu suspendieren und die erhaltene Suspension der die Vorstufe des Kaliumtetrafluoroaluminats umfassenden Lösung zuzugeben.

Sollte die Zugabe der strukturbeeinflussenden Substanz zu der die Vorstufe des Kaliumtetrafluoroaluminats umfassenden Lösung exotherm sein, kann es nötig sein, die entstehende Wärme ganz oder teilweise gemäß aus dem Stand der Technik bekannten Verfahren abzuführen.

Die Menge an strukturbeeinflussender Substanz, die der Lösung, die aus Schritt (i) erhalten wird, zugegeben wird, wird im erfindungsgemäßen Verfahren so bemessen, daß, bezogen auf die theoretische Ausbeute an Kaliumtetrafluoroaluminat, die Konzentration der strukturbeeinflussenden Substanz in der Lösung im allgemeinen im Bereich von 0.01 bis 1 Gew.-%, bevorzugt im Bereich von 0,05 bis 0,5 Gew.-% und insbesondere im Bereich 0,1 bis 0,2 Gew.-% liegt.

Im Rahmen der vorliegenden Erfindung hat sich insbesondere die Stoffgruppe der Polyalkylenglykole als eine Gruppe von Substanzen erwiesen, durch die sich die Kornstruktur von komplexen Fluoroaluminaten steuern läßt.

Demgemäß betrifft die vorliegende Erfindung ein Verfahren, wie oben beschrieben, das dadurch gekennzeichnet ist, daß die strukturbeeinflussende Substanz ein Polyalkylenglykol ist.

Als Polyalkylenglykole sind hierbei beispielsweise zu nennen: Polyethylenglykol, Polypropylenglykol, Polytetrahydrofurane, Polypropylenglykolethoxylate oder Polyethylenglykolpropoxylate.

Je nach gewünschter Komstruktur können dabei unterschiedliche Polyalkylenglykole eingesetzt werden. Natürlich ist es auch möglich, ein Gemisch aus zwei oder mehr davon zu verwenden.

Ebenso ist es möglich, Polyalkylenglykole unterschiedlicher Molmassen einzusetzen. So ist es beispielsweise denkbar, Polyalkylenglykol zu verwenden, das aus Molekülen mit einheitlichem Polymeristationsgrad aufgebaut ist. Denkbar ist es natürlich auch, Mischungen einzusetzen, die aus Kollektiven von Molekülen mit unterschiedlichen Molmassen bestehen.

Sollte es die Versuchsführung und/oder die gewünschte Komstruktur des Kaliumtetrafluoroaluminates erfordern, ist es im Rahmen des erfindungsgemäßen Verfahrens selbstverständlich möglich, Gemische aus zwei oder mehr verschiedenen Polyalkylenglykolen einzusetzen, von denen jedes molekular einheitlich oder polymolekular sein kann.

Die Polyalkylenglykole, die im erfindungsgemäßen Verfahren eingesetzt werden, können nach allen Verfahren, die aus dem Stand der Technik bekannt sind, hergestellt werden. Eine Übersicht über die wichtigsten Herstellungsverfahren findet sich beispielsweise in Ullmanns Encyklopädie der technischen Chemie, Band 19, 4. Auflage, Verlag Chemie, Weinheim, 1980, S. 31 bis 38.

Bevorzugt als strukturbeeinflussende Substanz wird im erfindungsgemäßen Verfahren Polyethylenglykol eingesetzt.

Daher betrifft die vorliegende Erfindung auch ein Verfahren, wie oben beschrieben, dadurch gekennzeichnet, daß das Polyalkylenglykol ein Polyethylenglykol ist.

Im allgemeinen liegt die Molmasse des verwendeten Polyethylenglykols dabei im Bereich von 200 bis 40000 g/mol, bevorzugt im Bereich von 400 bis 25000 g/mol und insbesondere bei ungefähr 20000 g/mol.

Demgemäß betrifft die vorliegende Erfindung auch ein Verfahren, wie oben beschrieben, dadurch gekennzeichnet, daß das Polyethylenglykol eine Molmasse im Bereich von 200 bis 40000 g/mol aufweist.

Ebenso betrifft die vorliegende Erfindung ein Kaliumtetrafluoroaluminat, herstellbar durch ein Verfahren, das den folgenden Schritt (I) umfaßt:
(I) Erhalt des Kaliumtetrafluoroaluminats durch Sprühtrocknung aus einer das Fluoroaluminat enthaltenden Suspension.

In einer bevorzugten Ausführungsform des erfindungsgemäßen Verfahrens werden Kaliumtetrafluoroaluminate erhalten, die einen Korndurchmesser aufweisen, der im allgemeinen im Bereich von 1 bis 150 µm, bevorzugt im Bereich von 1 bis 100 µm liegt.

Weiter weisen die erfindungsgemäß hergestellten Kaliumtetrafluoroaluminate eine Verteilung des Korndurchmessers auf, die sich im Vergleich zu Fluoroaluminaten, die nach Verfahren gemäß dem Stand der Technik hergestellt werden, durch verminderte Oberkombildung auszeichnet. Im allgemeinen liegt dabei das Maximum der Komdurchmesserverteilung im Bereich von 5 bis 17 µm, bevorzugt im Bereich von 7 bis 15 µm und weiter bevorzugt im Bereich von 9 bis 13 µm.

Ein weiterer Vorteil des erfindungsgemäßen Verfahrens ist darin zu sehen, daß durch die verminderte Oberkombildung Kaliumtetrafluoroaluminate herstellbar sind, bei denen eine mechanische Nachbearbeitung entfallen kann.

Das erfindungsgemäße Verfahren bietet unter anderem den Vorteil, daß es Kaliumtetrafluoroaluminate liefert, die einen niedrigeren Schmelzpunkt aufweisen als komplexe Fluoroaluminate, die nach einem Verfahren nach dem Stand der Technik hergestellt werden. Insbesondere wird im erfindungsgemäßen Verfahren Kaliumtetrafluoroaluminat hergestellt, das eine Schmelztemperatur aufweist, die im Bereich von 540 bis 550 °C und damit deutlich unter dem Schmelzpunkt des Eutektikums KAlF₄ -K₃AlF₆ liegt. Diese Schmelztemperatur liegt weit unter den bisher bekannten Schmelztemperaturen, die bei kommerziellen Produkten im Bereich von ungefähr 560 bis 575 °C liegen.

Demgemäß betrifft die vorliegende Erfindung auch ein Verfahren, wie oben beschrieben, das dadurch gekennzeichnet ist, daß das Kaliumtetrafluoroaluminat einen Schmelzpunkt aufweist, der im Bereich von 540 bis 550 °C liegt.

Da Kaliumtetrafluoroaluminat vornehmlich als Flußmittel in Hartlötprozessen eingesetzt wird, kommt dem niedrigen Schmelzbereich eine besondere wirtschaftliche und technische Bedeutung zu.

Demgemäß betrifft die vorliegende Erfindung die Verwendung eines Kaliumtetrafluoroaluminats, herstellbar durch ein Verfahren, wie oben beschrieben, oder ein Kaliumtetrafluoroaluminat, herstellbar durch ein Verfahren, das den Schritt (I), wie oben beschrieben, umfaßt, auf den Gebieten der Metallurgie.

Ebenso betrifft die vorliegende Erfindung die Verwendung eines Kaliumtetrafluoroaluminats, wie vorstehend beschrieben, dadurch gekennzeichnet, daß es als Flußmittel, insbesondere in Hartlötprozessen, eingesetzt wird.

Darüber hinaus betrifft die vorliegende Erfindung die Verwendung der Sprühtrocknung zur Steuerung der makroskopischen Struktur eines Kaliumtetrafluoroaluminats.

Ebenso betrifft die Erfindung die Verwendung eines Polyalkylenglykols zur Steuerung der makroskopischen Struktur eines komplexen Fluoroaluminats.

Weiter betrifft die Erfindung auch die Verwendung, wie vorstehend beschrieben, dadurch gekennzeichnet, daß als Polyalkylenglykol Polyethylenglykol eingesetzt wird.

In den folgenden Beispielen wird die vorliegende Erfindung näher erläutert.

### Beispiele

### Beispiel

1000 g technisches Aluminiumoxidhydrat mit einem Al₂O₃-Gehalt von 65 Gew.-% wurden bei Raumtemperatur mit 2150 ml einer wäßrigen Fluorwasserstofflösung mit einer HF-Konzentration von 42,6 Gew.-% umgesetzt.

Die erhaltene Lösung wies nach Wasserzugabe eine HAlF₄-Konzentration von 18,0 Gew.-% auf.

Zu der HAlF₄ enthaltenden Lösung wurden 2,7 g eines Polyethylenglykols der Molmasse 20000 g gegeben.

Zu dieser Lösung wurden innerhalb von 10 min 1300 ml einer 45 Gew.-%igen wäßrigen KOH-Lösung gegeben, wobei die Temperatur der Lösung auf einem Wert von 70 °C gehalten wurde.

Der pH-Wert der daraus erhaltenen Suspension wurde unter Verwendung einer elektronischen pH-Messung auf einen Wert von 6 eingestellt.

Die Suspension wurde im Anschluß daran bei einer Temperatur von 130 °C sprühgetrocknet.

Die Komanalyse des erhaltenen Kaliumtetrafluoroaluminats wurde mit dem Granulometer HR 850-B der Firma Cilas Alcatel ermittelt (Figur 1a).

In den Figuren 1a und 1b ist auf der Abszisse der Durchmesser d in µm, auf der Ordinate der Durchgang D in % aufgetragen.

### Vergleichsbeispiel

Das Vergleichsbeispiel wurde in gleicher Weise wie das obenstehende Beispiel durchgerührt. Der einzige Unterschied lag darin begründet, daß kein Polyethylenglykol zugegeben wurde.

Wie im obenstehenden Beispiel wurde die Kornanalyse mit dem Granulometer HR 850-B der Firma Cilas Alcatel ermittelt (Figur 1b).

Der Vergleich der Kornanalysen bzgl. des Beispiels und des Vergleichsbeispiels zeigt deutlich, daß die Oberkombildung bei Zugabe der strukturbeeinflussenden Substanz Polyethylenglykol deutlich vermindert wurde.

## Patentansprüche

1. Verfahren zur Herstellung eines Kaliumtetrafluoroaluminats durch Sprühtrocknung einer das Fluoroaluminat enthaltenden Suspension, **dadurch gekennzeichnet, dass** bei der Herstellung der das Fluoroaluminat enthaltenden Suspension eine strukturbeeinflussende Substanz eingesetzt wird und das Verfahren die Schritte (i) bis (iv) umfasst:
(i) Herstellen einer Lösung, die eine Vorstufe des Fluoroaluminats umfasst;
(ii) Zugabe der strukturbeeinflussenden Substanz zur Lösung aus (i);
(iii) Fällung des Fluoroaluminats aus der aus (ii) erhaltenen Lösung unter Erhalt der das Fluoroaluminat enthaltenden Suspension;
(iv) Sprühtrocknung der aus (iii) erhaltenen Suspension unter Erhalt des Fluoroaluminats, worin das Kaliumtetrafluoroaluminat einen Schmelzpunkt aufweist, der im Bereich von 540 bis 550 °C liegt.

2. Verfahren nach Anspruch 1, **dadurch gekennzeichnet, dass** die Vorstufe des Fluoroaluminats Tetrafluoroaluminiumsäure ist.

3. Verfahren nach Anspruch 1 oder 2, **dadurch gekennzeichnet, dass** die strukturbeeinflussende Substanz ein Polyalkylenglykol ist.

4. Verfahren nach Anspruch 3, **dadurch gekennzeichnet, dass** das Polyalkylenglykol ein Polyethylenglykol ist.

5. Verfahren nach Anspruch 4, **dadurch gekennzeichnet, dass** das Polyethylenglykol eine Molmasse im Bereich von 200 bis 40 000 g/Mol aufweist.

6. Ein Kaliumtetrafluoroaluminat das einen Schmelzpunkt aufweist, der im Bereich von 540 bis 550 °C liegt, herstellbar durch ein Verfahren, das die Schritte (i) bis (iv) umfasst:
(i) Herstellen einer Lösung, die eine Vorstufe des Fluoroaluminats umfasst;
(ii) Zugabe einer strukturbeeinflussenden Substanz zur Lösung aus (i);
(iii) Fällung des Fluoroaluminats aus der aus (ii) erhaltenen Lösung unter Erhalt der das Fluoroaluminat enthaltenden Suspension;
(iv) Sprühtrocknung der aus (iii) erhaltenen Suspension unter Erhalt des Fluoroaluminats.

7. Verwendung eines Kaliumtetrafluoroaluminats, herstellbar durch ein Verfahren gemäß einem der Ansprüche 1 bis 5, oder eines Kaliumtetrafluoroaluminats gemäß Anspruch 6, als Hilfsmittel auf den Gebieten der Metallurgie.

8. Verwendung nach Anspruch 7, **dadurch gekennzeichnet, dass** das Kaliumtetrafluoroaluminat als Flussmittel, insbesondere in Hartlötprozessen, eingesetzt wird.

9. Verwendung eines Polyalkylenglykols zur Steuerung der makroskopischen Struktur eines komplexen Fluoroaluminats.

10. Verwendung nach Anspruch 9, **dadurch gekennzeichnet, dass** als Polyalkylenglykol Polyethylenglykol eingesetzt wird.

## Claims

1. Process for manufacturing a potassium tetrafluoroaluminate by spray-drying a suspension which contains the fluoroaluminate, **characterised in that** a structure-influencing substance is used in the manufacture of the fluoroaluminate-containing suspension and the process comprises the steps (i) to (iv):
(i) manufacturing a solution which comprises a precursor of the fluoroaluminate;
(ii) adding the structure-influencing substance to the solution from (i);
(iii) precipitating the fluoroaluminate from the solution obtained from (ii) to obtain the fluoroaluminate-containing suspension;
(iv) spray-drying the suspension obtained from (iii) to obtain the fluoroaluminate, the potassium tetrafluoroaluminate having a melting point in the range from 540 to 550 °C.

2. Process according to claim 1, **characterised in that** the precursor of the fluoroaluminate is tetrafluoroaluminic acid.

3. Process according to either claim 1 or claim 2, **characterised in that** the structure-influencing substance is a polyalkylene glycol.

4. Process according to claim 3, **characterised in that** the polyalkylene glycol is a polyethylene glycol.

5. Process according to claim 4, **characterised in that** the polyethylene glycol has a molar mass in the range from 200 to 40,000 g/Mol.

6. Potassium tetrafluoroaluminate having a melting point in the range from 540 to 550 °C which can be manufactured by a process comprising the steps (i) to (iv):
(i) manufacturing a solution which comprises a precursor of the fluoroaluminate;
(ii) adding a structure-influencing substance to the solution from (i);
(iii) precipitating the fluoroaluminate from the solution obtained from (ii) to obtain the fluoroaluminate-containing suspension;
(iv) spray-drying the suspension obtained from (iii) to obtain the fluoroaluminate.

7. Use of a potassium tetrafluoroaluminate which can be manufactured by a process according to any one of claims 1 to 5, or a potassium tetrafluoroaluminate according to claim 6, as an additive in the field of metallurgy.

8. Use according to claim 7, **characterised in that** the potassium tetrafluoroaluminate is used as a fluxing agent, in particular in hard-soldering processes.

9. Use of a polyalkylene glycol for controlling the macroscopic structure of a complex fluoroaluminate.

10. Use according to claim 9, **characterised in that** polyethylene glycol is used as a polyalkylene glycol.

## Revendications

1. Procédé de fabrication de tétrafluoroaluminate de potassium par séchage par atomisation d'une suspension contenant le fluoroaluminate, **caractérisé en ce que**, lors de la fabrication de la suspension contenant le fluoroaluminate, une substance influençant la structure est mise en oeuvre, et **en ce que** le procédé comprend les étapes (i) à (iv) :
(i) fabrication d'une solution qui comprend un précurseur du fluoroaluminate ;
(ii) addition à la solution résultant de (i) de la substance influençant la structure ;
(iii) précipitation du fluoroaluminate à partir de la solution obtenue à partir de (ii) pour obtenir la suspension contenant le fluoroaluminate ;
(iv) séchage par atomisation de la suspension obtenue à partir de (iii) pour obtenir le fluoroaluminate,
où le tétrafluoroaluminate de potassium présente un point de fusion qui se situe dans la plage de 540 à 550 °C.

2. Procédé selon la revendication 1, **caractérisé en ce que** le précurseur du fluoroaluminate est l'acide tétrafluoroaluminique.

3. Procédé selon la revendication 1 ou 2, **caractérisé en ce que** la substance influençant la structure est un poly(alkylène glycol).

4. Procédé selon la revendication 3, **caractérisé en ce que** le poly(alkylène glycol) est un poly(éthylène glycol).

5. Procédé selon la revendication 4, **caractérisé en ce que** le poly(éthylène glycol) présente une masse molaire dans la plage de 200 à 40 000 g/mol.

6. Tétrafluoroaluminate de potassium qui présente un point de fusion situé dans la plage de 540 à 550 °C et qui peut être fabriqué par un procédé comprenant les étapes (i) à (iv) :
(i) fabrication d'une solution qui comprend un précurseur du fluoroaluminate ;
(ii) addition à la solution résultant de (i) d'une substance influençant la structure ;
(iii) précipitation du fluoroaluminate à partir de la solution obtenue à partir de (ii) pour obtenir la suspension contenant le fluoroaluminate ;
(iv) séchage par atomisation de la suspension obtenue à partir de (iii) pour obtenir le fluoroaluminate.

7. Utilisation d'un tétrafluoroaluminate de potassium pouvant être fabriqué par un procédé selon une des revendications 1 à 5, ou d'un tétrafluoroaluminate de potassium selon la revendication 6, en tant qu'adjuvant dans les domaines de la métallurgie.

8. Utilisation selon la revendication 7, **caractérisée en ce que** le tétrafluoroaluminate de potassium est utilisé en tant que fondant, en particulier dans des processus de brasage fort.

9. Utilisation d'un poly(alkylène glycol) pour la commande de la structure macroscopique d'un complexe de fluoroaluminate.

10. Utilisation selon la revendication 9, **caractérisée en ce que**, comme poly(alkylène glycol), il est utilisé du poly(éthylène glycol).
